Europäisches Patentamt

European Patent Office

Office européen des brevets

(11) Publication number: **0 059 284**
**B1**

(12) # EUROPEAN PATENT SPECIFICATION

(45) Date of publication of patent specification: **29.05.85**

(21) Application number: **81304577.0**

(22) Date of filing: **02.10.81**

(51) Int. Cl.⁴: **B 01 D 29/00,** B 01 D 35/00, B 01 D 23/28

(54) **Disposable, one-piece filter unit and method of manufacturing the same.**

(30) Priority: **27.02.81 US 238818**

(43) Date of publication of application:
**08.09.82 Bulletin 82/36**

(45) Publication of the grant of the patent:
**29.05.85 Bulletin 85/22**

(84) Designated Contracting States:
**BE CH DE FR GB IT LI LU NL SE**

(56) References cited:
**FR-A-1 132 477**
**US-A-2 541 524**
**US-A-3 295 686**

(73) Proprietor: **SYBRON CORPORATION**
**1100 Midtown Tower**
**Rochester, NY 14604 (US)**

(72) Inventor: **Mehra, Ravinder C.**
**One Crow Hill Drive**
**Fairport New York (US)**
Inventor: **Hahn, Heinz W.**
**55 Galdmar Drive**
**Rochester New York (US)**
Inventor: **Aggarwal, Raj K.**
**13 Hickory Pond Drive**
**Penfield New York (US)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

The present invention relates to a disposable filtration unit, a body for use therewith and a method of manufacturing the unit. More particularly, the invention relates to a filtration unit wherein the reservoir for the liquid to be filtered and the receptacle for receiving the filtrate are formed as a unitary one-piece unit.

Filtration units of the type described herein are used in a wide variety of laboratory applications. Consequently, it is desirable that the unit be in a sterile condition prior to use. U.S. Patent No. 3,295,686 discloses such a disposable filtration unit which eliminates many of the drawbacks of reusable filtration units described as prior art in that patent.

A disposable filtration unit according to US—A—3,295,686 generally consists of a reservoir for holding the liquid to be filtered, a separate receptacle for receiving the filtrate and a support member for holding the filter medium. These three components would be assembled as by welding to form a unitary structure.

More particularly, the disposable filtration unit according to US—A—3,295,686 comprises:

(a) a generally cylindrical body including:

(i) a generally cylindrical wall having an open top and a closed bottom; and

(ii) a shoulder which extends radially inwardly from the internal surface of the cylindrical wall intermediate the top and bottom thereof, which divides the internal volume of the body into an upper reservoir for receiving a liquid to be filtered and a lower receptacle for receiving the filtrate, and which has a first opening therethrough providing communication between the reservoir and receptacle;

(b) a perforated planar support located upon the shoulder and sealed about its periphery to the internal surface of the cylindrical wall;

(c) a collar integral with and depending from the support and extending through the first opening and into the receptacle; and

(d) a sheet-like filter medium located upon the support, with its periphery fixed thereto.

Also, US—A—2 541 524 discloses the principle of integrally forming an annular inwardly extending flange or shoulder in a liquid filtering reservoir of such a filtration unit.

It is evident from these prior art documents that a disposable filtration unit can comprise:

(a) a generally cylindrical body including:

(i) a generally cylindrical side wall having an open top and a closed bottom; and

(ii) an internal annular shoulder which extends radially inwardly from the internal surface of the cylindrical side wall intermediate the top and bottom thereof, which divides the internal volume of the body into an upper reservoir for receiving a liquid to be filtered and a lower receptacle for receiving the filtrate, which has a first opening therethrough providing communication between the reservoir and receptacle, and which is moulded integrally with the wall so as to form a unitary structure therewith;

(b) a perforated disc located upon the shoulder and sealed about its periphery to the internal surface of the cylindrical side wall;

(c) a collar integral with and depending from the perforated disc and extending through the first opening and into the receptacle;

(d) a sheet-like filter medium located upon the perforated disc, with its periphery fixed thereto;

(e) a pouring spout moulded integrally with the cylindrical wall and opening into the lower receptacle; and

(f) a breather tube communicating with the lower receptacle remote from the spout and adjacent the shoulder.

Such prior art constructions require that the different components be provided with appropriate structures to permit them to be fitted together and attached one to another. Moreover, in such constructions, care has to be exercised in order to ensure an air-tight seal about the filter medium so as to prevent leakage of air from the surrounding environment into the filtrate receptacle.

The present invention overcomes many of the drawbacks of prior art disposable filtration units by providing a unit which not only greatly reduces the manufacturing steps but also provides a filtration unit wherein there is no possibility for leakage of air into the filtrate receptacle.

In accordance with the invention, therefore, the breather tube is integral with the cylindrical side wall, extends through and is wholly isolated from the pouring spout, and communicates with the lower receptacle, adjacent the cylindrical side wall and diametrically opposite the spout, by means of an air passage. The breather tube communicates with the lower receptacle at the farthest most point from the pouring spout, so as to prevent active contact of liquid in the receptacle with air entering the receptacle as liquid is being poured from the receptacle.

Another aspect of the invention provides a unitary, one piece moulded plastics body, for use in assembling a disposable filtration unit, comprising

(a) a generally cylindrical side wall,

(b) an internal annular shoulder located on the wall dividing the internal volume of the body into an upper section and a lower section, and having a first opening (32) which provides communication between the upper and lower sections;

(c) an annular flange depending from the shoulder about the opening, and having a slot;

(d) a spout opening into the lower section and being on a side of the wall diametrically opposite the slot;

(e) a second internal shoulder located on the lower end of the depending annular flange and having a second opening which is axially aligned with, and smaller in diameter than, the first opening; and

(f) an air breather tube integral with and extending through the spout, with one of its ends merging with and opening through the flange.

A further aspect of the invention provides a method of making a disposable, pressure filtration unit comprising the steps of:

(a) moulding a generally cylindrical, unitary one-piece body having

(i) an upper reservoir section;

(ii) a lower receptacle section;

(iii) an internal shoulder defining an opening (32) which provides communication between the reservoir and receptacle sections; and

(iv) a pouring spout and breather tube which extends and opens into the receptacle section remote from the spout, and which is isolated from the spout;

(b) providing a perforated disc having a depending annular collar, the outside diameter of the collar being smaller than the inside diameter of the opening defined by the shoulder;

(c) attaching a sheet-like filter medium to the perforated plate;

(d) inserting the collar through the opening defined by the shoulder, so as to locate the perforated disc against the shoulder; and

(e) fixing the perforated disc in position against the shoulder.

One embodiment of the invention will now be described by way of example and with reference to the accompanying drawings in which:

Figure 1 is an elevation view in section showing a disposable filtration unit of the present invention;

Figure 2 is a side view of a portion of the unit shown in Figure 1; and

Figure 3 is a view taken along lines 3—3 of Figure 2.

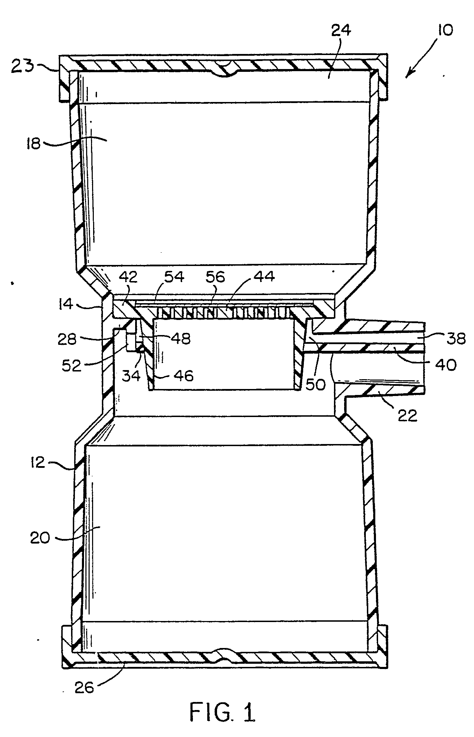

Referring to the drawings, Figure 1 shows the filtration unit of the present invention generally indicated at 10. The unit is formed by a generally cylindrical side wall 12 which has an intermediate necked portion 14. This necked portion divides the filtration unit into an upper section or reservoir 18 for containing the liquid to be filtered, and a lower section receptacle 20 for receiving the filtrate.

A pouring spout 22 extending from and formed integral with the neck portion communicates with receptacle 20. It should be appreciated that except for the necked portion and the pouring spout, the cylindrical side wall 12 is continuous and unbroken over its full height.

The cylindrical side wall 12 has an open top 24 which can be closed by a removable cover 23. The bottom of the cylinder, however, is closed by a closure 26 which can be either formed integral with the cylindrical wall or can be a separate cap member fixed to the cylindrical wall by any suitable means such as a solvent or ultrasonic welding.

Formed integral with side wall 12 at the necked portion 14 is a first, internal annular shoulder 28.

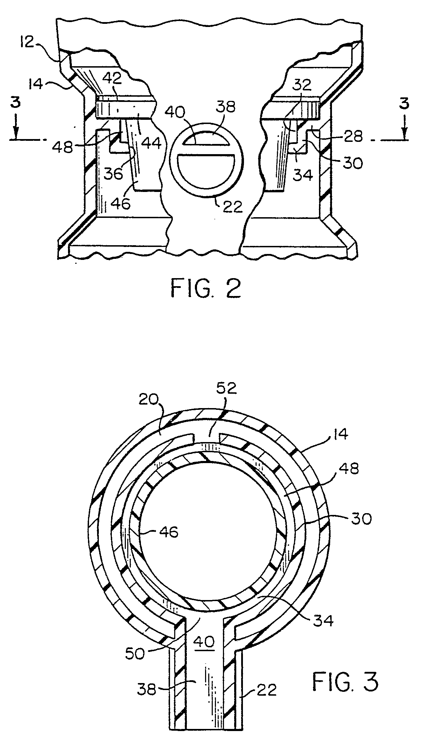

As best seen in Figure 2, a flange 30 depends from about the inner periphery of shoulder 28. The inside diameter of this flange defines an opening 32. The lower end of flange 30 is provided with a second, internal annular shoulder 34 the inside diameter of which, defines a second opening 36. These two openings 32 and 36 provide the sole communication between the upper reservoir and the lower receptacle. The lower opening 36 is slightly smaller in diameter than the upper opening 32 for purposes set out hereinbelow.

As shown in Figures 1 and 2, spout 22 includes a breather tube 38. This tube is formed by a partition 40 which extends across the spout and extends back through the spout into receptacle 20 to intersect and merge with flange 30.

It should be appreciated that the unit as thus far described can be molded in one piece from polystyrene, or other suitable plastic materials. Preferably the plastic should be of the type which is heat degraded so that the filtration unit cannot be sterilized and must be discarded after use. Further, any one of several molding techniques such as blow molding or injection molding may be used to form the structure as described hereinabove.

The second major component of the filtration unit 10 is a filter medium support 42. This support comprises a perforated disc 44 having an integrally formed annular collar 46 which depends from the disc. It should be appreciated that the diameter of perforated disc 44 is substantially the same as the internal diameter of the necked portion 14. The outside diameter of collar 46 depending from the disc is slightly less than the diameter of opening 32 so the collar fits easily through this opening as shown in Figure 2. In addition, the collar 46 is tapered and is of a length sufficient to extend through the lower opening 36 in the second (lower) shoulder 34 and slightly below the level of spout 22. The outside diameter of collar 46 where it extends through opening 36 is slightly greater than the inside diameter of this opening so as to provide an interference fit with the lower shoulder 34. With this arrangement, the filter medium support 42 can be fixed within the filtration unit 10 and against shoulder 28 simply by inserting the collar through openings 32 and 36 and thereafter attaching the periphery of disc 44 to the internal surface of the neck portion 14 by any suitable means such as ultrasonic welding or an appropriate solvent.

Because collar 46 has an interference fit with the lower shoulder 34, an annular channel or air passage 48 is defined about the collar. As best seen in Figures 1 and 3 this channel 48 communicates with the breather tube 38 at 50 on one side of the collar 46 and communicates with receptacle 20 on the other side of the collar through a slot 52 formed in the depending flange 30. Except for these points of communication, channel 48 is otherwise closed by the tight fit of the collar 46 to the shoulder 34 on one level and the welding of the periphery of disc 44 to the neck portion 14 on an upper level. Thus, with the assembly as shown in Figure 1, breather tube 38 opens into receptacle 20 only at 52 which is a point farthest from spout 22. This insures that when the filtration unit 10 is tipped to pour the contents of receptacle 20 through spout 22, the air entering the receptacle through breather tube 38 does not bubble through or otherwise come into active contact with the liquid in the receptacle. This minimizes any possible chemical reaction between the air and the filtrate or contamination of the filtrate by air borne bacteria carried by the air entering the receptacle.

To complete the filter, the upper surface of disc 44 is provided with a seat 54 to receive the appropriate sheet-like filter medium 56. Such a filter medium can be any of various suitable materials such as a standard filter membrane having any desired degree of porosity. The attachment of the filter medium to disc 44 can be accomplished by sonic or heat sealing prior to the assembly of the filter support to the side wall of the necked portion 14 and shoulder 28.

In addition to being a pouring spout, spout 22 can also be attached by a conventional connector (not shown) to a suitable means for evacuating receptacle 20 so as to facilitate the filtration of liquid through the filter medium.

Thus, it should be appreciated that the present invention provides a filtration unit and a method of its manufacture which is an improvement over the state of the art. In this respect, molding the body of the unit in one piece, not only reduces the cost of manufacture, but also provides a unitary structure which eliminates any problems of air leaking into the receptacle from a point downstream of the filter medium. The present invention further allows for the complete assembly of the filtration unit in only two significant steps; namely, the attachment of a filter medium to support 42 and the attachment of the support to the wall of necked portion 14 and shoulder 34.

The filter unit of the present unit also provides a unique design for pouring filtrate from the receptacle 20 without having the air which enters the receptacle actively contact the filtrate. In this respect, the collar 46, partition 40 and shoulder 34 cooperate to extend the length of breather tube 38 so as to locate the entrance of the breather tube at slot 52. This entrance is at a point where it is least likely that any air entering the receptacle will come into active contact with the filtrate in the receptacle as the filtrate is poured through spout 22. Moreover, by having collar 46 extend through the lower shoulder 34 and below the level of spout 22, there is little or no danger of filtrate aspirating through the spout as a vacuum is being drawn. Thus, the present invention does provide a simple easily manufactured and inexpensive disposable filtration unit.

## Claims

1. A disposable filtration unit (10) comprising:
   (a) a generally cylindrical body including:
   (i) a generally cylindrical side wall (12) having an open top (24) and a closed bottom (26); and
   (ii) an internal annular shoulder (28) which extends radially inwardly from the internal surface of the cylindrical side wall (12) intermediate the top (24) and bottom (26) thereof, which divides the internal volume of the body into an upper reservoir (18) for receiving a liquid to be filtered and a lower receptacle (20) for receiving the filtrate, which has a first opening (32) therethrough providing communication between the reservoir (18) and receptacle (20), and which is moulded integrally with the wall (12) so as to form a unitary structure therewith;
   (b) a perforated disc (44) located upon the shoulder (28) and sealed about its periphery to the internal surface of the cylindrical side wall (12);
   (c) a collar (46) integral with and depending from the perforated disc (44) and extending through the first opening (32) and into the receptacle (20);
   (d) a sheet-like filter medium (56) located upon the perforated disc (44), with its periphery fixed thereto;
   (e) a pouring spout (22) moulded integrally with the cylindrical wall (12) and opening into the lower receptacle (20); and
   (f) a breather tube (38) communicating with the lower receptacle (20) remote from the spout (22) and adjacent the shoulder (28);
   characterised in that the breather tube (38) is integral with the cylindrical side wall (12), extends through and is wholly isolated from the pouring spout (22), and communicates with the lower receptacle (20), adjacent the cylindrical side wall (12) and diametrically opposite the spout (22), by means of an air passage (48).

2. A disposable filtration unit (10) as claimed in claim 1, characterised in that the air passage (48) is formed by:
   (a) an annular flange (30) which is integral with the cylindrical side wall (12), which depends from the shoulder (28), and whose inside diameter forms the first opening (32); and
   (b) a second shoulder (34) on the flange (30), whose inside diameter (34) forms a second opening (36) axially aligned with and smaller in diameter than the first opening (32);
   in that a partition (40) in the spout (22) divides the spout (22) into the breather tube (38) and a pouring tube and extends back through the spout (22) and into the receptacle (20) to merge with the second shoulder (34), and in that the collar (46) extends through the first and second openings (32, 36) with the outside diameter of the collar (46) having an interference fit with the second opening (36), so as to provide an air tight seal between the collar (46) and the second shoulder (34).

3. A disposable filtration unit (10) as claimed in claim 1 or 2, characterised in that the flange (30) has a slot (52), remote from the breather tube (38), which provides the sole communication between the air passage (48) and the lower receptacle (20).

4. A unitary, one-piece, moulded plastics body, for use in assemblying a disposable filtration unit, comprising:
   (a) a generally cylindrical side wall (12);
   (b) an internal annular shoulder (28) located on the side wall (12), dividing the internal volume of the body into an upper section (18) and a lower section (20), and having a first opening (32) which provides communication between the upper and lower sections (18, 20);

(c) an annular flange (30) depending from the shoulder (28) about the opening (32), and having a slot (52);

(d) a spout (22) opening into the lower section (20) and being on a side of the wall (12) diametrically opposite the slot (52);

(e) a second internal shoulder (34) located on the lower end of the depending annular flange (30) and having a second opening (36) which is axially aligned with, and smaller in diameter than, the first opening (32); and

(f) an air breather tube (38) integral with and extending through the spout (22), with one of its ends merging with and opening through the flange (30).

5. A method of making a disposable, pressure filtration unit comprising the steps of:

(a) moulding a generally cylindrical, unitary one-piece body having

(i) an upper reservoir section (18);

(ii) lower receptacle section (20);

(iii) an internal shoulder (28) defining an opening (32) which provides communication between the reservoir and receptacle sections (18, 20); and

(iv) a pouring spout (22) and breather tube (38) which extends and opens into the receptacle section (20) remote from the spout (22), and which is isolated from the spout (22);

(b) providing a perforated disc (44) having a depending annular collar (46), the outside diameter of the collar (46) being smaller than the inside diameter of the opening (32) defined by the shoulder (28);

(c) attaching a sheet-like filter medium (56) to the perforated plate (44);

(d) inserting the collar (46) through the opening (32) defined by the shoulder (28), so as to locate the perforated disc (44) against the shoulder (28); and

(e) fixing the perforated disc (44) in position against the shoulder (28).

6. A method according to claim 5, wherein the unitary body is moulded from a plastics material.

**Revendications**

1. Elément de filtre jetable (10) comprenant:

(a) un corps sensiblement cylindrique comprenant:

(i) une paroi latérale sensiblement cylindrique (12) dont le haut (24) est ouvert et le fond (26) est fermé; et

(ii) un épaulement annulaire interne (28) qui s'étend radialement vers l'intérieur à partir de la surface interne de la paroi latérale cylindrique (12) depuis un point situé entre le haut (24) et le fond (26) de celui-ci, épaulement qui sépare le volume interne du corps en un réservoir supérieur (18) destiné à recevoir un liquide à filtrer et un récipient inférieur (20) destiné à recevoir le filtrat, qui est percé d'une première ouverture (32) assurant la communication entre le réservoir (18) et le récipient (20) et qui est moulé en une seule pièce avec la paroi (12) de façon à former une structure unitaire avec celle-ci;

(b) un disque perforé (44) logé sur l'épaulement (28) et fermé à sa périphérie de manière étanche par rapport à la surface interne de la paroi latérale cylindrique (12);

(c) un collet (46) solidaire du disque perforé (44), auquel il est suspendu et traversant la première ouverture (32) pour venir pénétrer dans le récipient (20);

(d) un organe filtrant en forme de feuille (56) situé sur le disque perforé (44), auquel il est fixé par sa périphérie;

(e) un bec verseur (22) moulé en une seule pièce avec la paroi cylindrique (12) et débouchant dans le récipient inférieur (20); et

(f) un tube d'aspiration (38) en communication avec la récipient inférieur (20) en un point éloigné du bec (22) et adjacent à l'épaulement (28);

caractérisé en ce que le tube d'aspiration (38) est solidaire de la paroi latérale cylindrique (12), traverse celle-ci et est entièrement isolé par rapport au bec verseur (22), et communique avec le récipient inférieur (20), et un point adjacent à la paroi latérale cylindrique (12) et diamètralement à l'opposé au bec (22) par un passage à air (48).

2. Elément de filtre jetable (10) selon la revendication 1, caractérisé en ce que le passage à air (48) est formé par:

a) un rebord annulaire (30) qui est solidaire de la paroi latérale cylindrique (12), qui est suspendu à l'épaulement (28) et dont le diamètre intérieur délimite la première ouverture (32); et

b) un second épaulement (34) réalisé sur le rebord (30), dont le diamètre intérieur (34) délimite une seconde ouverture (36) d'un diamètre inférieur à celui de la première ouverture (32) avec laquelle elle est alignée axialement, en ce qu'une cloison (40) située dans le bec (22) sépare le bec (22) en un tube d'aspiration (38) et un tube verseur et se prolonge en arrière en traversant le bec (22) et pénètre dans le récipient (20) pour rejoindre le second épaulement (34) et en ce que le collet (46) traverse les première et seconde ouvertures (32, 36), le diamètre extérieur du collet (46) étant ajusté à tolérance négative par rapport à la seconde ouverture (36) de façon à réaliser un joint étanche à l'air entre le collet (46) et le second épaulement (34).

3. Elément de filtre jetable (10) selon la revendication 1 ou 2, caractérisé en ce que le rebord (30) est pourvu d'une fente (52), éloignée du tube d'aspiration (38), qui réalise la seule communication entre le passage à air (48) et le récipient inférieur (20).

4. Corps en matière plastique moulé d'une seule pièce utilisable pour l'assemblage d'un élément de filtre jetable, comprenant:

a) une paroi latérale sensiblement cylindrique (12);

b) un épaulement annulaire interne (28) situé sur la paroi latérale (12), séparant le volume interne du corps en une section supérieure (18) et une section inférieure (20) et comprenant une première ouverture (32) qui assure la communication entre les sections supérieures et inférieures (18, 20);

c) un rebord annulaire (30) suspendu à l'épaulement (28) autour de l'ouverture (32) et comprenant une fente (52);

d) un bec (22) débouchant dans la section inférieure (20) et étant situé sur une côté de la paroi (20) diamétralement à l'opposé de la fente (52);

e) un second épaulement interne (34) situé sur l'extrémité inférieure du rebord annulaire suspendu (30) et comprenant une seconde ouverture (36) d'un diamètre inférieur à celui de la première ouverture (32) avec laquelle elle est alignée axialement; et

f) un tube d'aspiration d'air (38) solidaire du bec (22) qi'il traverse, une de ses extrémités rejoignant le rebord (30) par où il débouche.

5. Procédé de fabrication d'un élément de filtre à pression jetable comprenant les étapes suivantes:

a) moulage d'un corps unitaire d'une seule pièce sensiblement cylindrique comprenant:

1) une section supérieure formant réservoir (18);

2) une section inférieure formant récipient (20);

3) un épaulement interne (28) délimitant une ouverture (32) qui assure la communication entre les sections formant réservoir et récipient (18, 20); et

4) un bec verseur (22) et un tube d'aspiration (38) qui débouche dans la section formant récipient (20) en un point éloigné du bec (22) et qui est isolé par rapport au bec (22);

b) réalisation d'un disque perforé (44) doté d'un collet annulaire suspendu (46), le diamètre extérieure du collet (46) étant inférieur au diamètre intérieur de l'ouverture (32) délimitée par l'épaulement (28);

c) fixation d'un organe filtrant en forme de feuille (56) sur la plaque perforée (44);

d) insertion du collet (46) dans l'ouverture (32) délimitée par l'épaulement (28), de façon à positionner le disque perforé (44) contre l'épaulement (28); et

e) fixation du disque perforé (44) en position contre l'épaulement (28).

6. Procédé selon la revendication 5, dans lequel le corps unitaire est moulé en une matière plastique.

**Patentansprüche**

1. Wegwerffilter (10) mit

(a) einem im wesentlichen zylindrischen Grundkörper, der

(i) eine im wesentlichen zylindrische Seitenwand (12) aufweist, deren oberer Bereich (24) offen und deren Boden (26) geschlossen ist und der

(ii) ferner eine innere ringförmige Schulter (28) aufweist, die sich zwischen dem oberen Bereich (24) und dem Boden (26) von der inneren Oberfläche der zylindrischen Seitenwand (12) radial einwärts erstreckt, durch welche das Volumen des Grundkörpers in ein oberes Vorratsgefäß (18) zur Aufnahme einer zu filternden Flüssigkeit und ein unteres Aufnahmegefäß (20) zur Aufnahme des Filtrates unterteilt wird, welche eine erste Öffnung (32) zur Herstellung einer Verbindung zwischen dem Vorratsgefäß (18) und dem Aufnahmegefäß (20) aufweist und welche zur Bildung einer mit der Seitenwand (12) einheitlichen Gestalt zusammenhängend mit dieser geformt ist,

(b) einer Lochscheibe (44), die auf der Schulter (28) angeordnet ist und entlang ihres Umfanges dichtend an der inneren Oberfläche der zylindrischen Seitenwand (12) anliegt,

(c) einem zusammenhängend mit der Lochscheibe (44) ausgebildeten Kragen (46), der sich von der Lochscheibe (44) nach unten durch eine erste Öffnung (32) hindurch und in das Aufnahmegefäß (20) hineinerstreckt,

(d) einem blattartigen Filtermittel (56), das auf der Lochscheibe (44) angeordnet ist, dessen Umfangsbereich an dieser befestigt ist,

(e) einer Ausgießtülle (22), die zusammenhängend mit der zylindrischen Seitenwand (12) ausgebildet ist und die sich in das Aufnahmegefäß (20) hinein öffnet

(f) und mit einem Entlüftungskanal (38), der an einer von der Ausgießtülle (22) entfernt gelegenen, der Schulter (28) benachbarten Stelle in das Aufnahmegefäß (20) führt,

dadurch gekennzeichnet, daß der Entlüftungskanal (38) zusammenhängend mit der zylindrischen Seitenwand (12) ausgebildet ist, sich durch die Ausgießtülle (22) hindurcherstreckt, von dieser jedoch vollständig isoliert ist und daß der Entlüftungskanal (18) mittels eines Luftkanals (48) in der Nähe der Seitenwandung (12) und der Ausgießtülle (22) diametral gegenüberliegend mit dem unten angeordneten Aufnahmegefäß (20) in Verbindung steht.

2. Wegwerffilter (10) nach Anspruch 1, dadurch gekennzeichnet, daß der Luftkanal (48) durch

(a) eine ringförmige, zusammenhängend mit der zylindrischen Seitenwand (12) ausgebildete Flanke (30), die sich von der Schulter (28) nach unten erstreckt, deren Innendurchmesser die erste Öffnung (32) bildet und durch

(b) eine zweite, an die Flanke (30) angeformte Schulter (34), durch deren Innendurchmesser (34) eine zweite Öffnung (36) definiert wird, die axial mit der ersten Öffnung (32) ausgerichtet ist,

jedoch im Durchmesser kleiner als dieser ist, gebildet wird, daß die Ausgießtülle (22) durch eine Trennwand (40) in den Entlüftungskanal (18) und einen Ausgießkanal unterteilt wird, daß die Trennwand (40) sich rückwärts durch die Ausgießtülle (22) hindurch und in das Aufnahmegefäß (20) hinein erstreckt, hierbei in die zweite Schulter (34) übergeht und daß sich der Kragen (46) durch die genannten ersten und zweiten Öffnungen (32, 34) hindurch erstreckt, wobei der Außendurchmesser des Kragens (46) in der zweiten Öffnung (36) einen Festsitz aufweist, so daß sich zwischen dem Kragen (46) und der zweiten Schulter (34) eine luftundurchlässige Abdichtung ergibt.

3. Wegwerffilter (10) nach Anspruch 1 oder 2, dadurch gekennzeichnet, daß die Flanke (30) an einer von dem Entlüftungskanal (38) entfernt gelegenen Stelle einen Schlitz (52) aufweist, der die einzige Verbindung zwischen dem Luftkanal (48) und dem unten angeordneten Aufnahmegefäß (20) bildet.

4. Einheitlicher, einstückig geformter Kunststoffkörper zur Verwendung bei einem Wegwerffilter, gekennzeichnet durch

(a) eine im wesentlichen zylindrische Seitenwandung (12),

(b) eine innere ringförmige Schulter (28), die auf der Seitenwandung (12) angeordnet ist, durch welche das Volumen des Kunststoffkörpers in einen oberen Abschnitt (18) und einen unteren Abschnitt (20) unterteilt wird und wobei die Schulter (28) eine erste Öffnung (32) aufweist, über welche die oberen und unteren Abschnitte (18, 20) miteinander in Verbindung stehen,

(c) eine ringförmige Flanke (30), die sich von der um die Öffnung (32) gebildeten Schulter (28) nach unten erstreckt und einen Schlitz (52) aufweist,

(d) eine Ausgießtülle (22), die sich in den unteren Abschnitt (20) öffnet und die sich an einer dem Schlitz (52) diametral gegenüberliegenden Stelle an der Seitenwand (12) befindet,

(e) eine zweite innere Schulter (34), die am unteren Ende der sich nach unten erstreckenden ringförmigen Flanke (30) angeordnet ist und eine zweite Öffnung (36) aufweist, die mit der ersten Öffnung (32) axial ausgerichtet ist, jedoch einen kleineren Durchmesser als diese aufweist und

(f) einen Entlüftungskanal (38), der sich durch die Ausgießtülle (22) hindurch erstreckt und zusammenhängend mit dieser ausgebildet ist, wobei eines der beiden Enden des Entlüftungskanals in die Flanke (30) übergeht und hier eine Öffnung aufweist.

5. Verfahren zur Herstellung eines Wegwerfdruckfilters, dadurch gekennzeichnet,

(a) daß ein im wesentlichen zylindrischer, einstückiger einheitlicher Grundkörper geformt wird, der

(i) einen oberen Vorratsabschnitt (18),

(ii) einen unteren Aufnahmeabschnitt (20),

(iii) eine innere Schulter (28), durch welche eine Öffnung (32) definiert wird, welche eine Verbindung zwischen dem Vorratsabschnitt (18) und dem Aufnahmeabschnitt (20) bildet und

(iv) eine Ausgießtülle (22) sowie einen Entlüftungskanal aufweist, welcher sich in den Aufnahmeabschnitt (20) hinein erstreckt und sich an einer entfernt von der Ausgießtülle (22) gelegenen Stelle in den Aufnahmeabschnitt (20) hinein öffnet, wobei der Entlüftungskanal (38) von der Ausgießtülle (22) isoliert angeordnet ist,

(b) daß eine Lochscheibe (44), von der sich nach unten ein ringförmiger Kragen (46) erstreckt, wobei der Außendurchmesser des Kragens (46) kleiner als der Innendurchmesser der durch die Schulter (28) definierten Öffnung (32) ist, eingebaut wird,

(c) daß ein blattartiges Filtermittel (46) an der Lochplatte (44) befestigt wird,

(d) daß der Kragen (46) durch die durch die Schulter (28) definierte Öffnung (32) eingesetzt wird, so daß die Lochscheibe (44) an der Schulter (28) angeordnet ist und

(e) daß die sich in ihrer Betriebsstellung befindliche Lochscheibe (44) an der Schulter (28) befestigt wird.

6. Verfahren nach Anspruch 5, dadurch gekennzeichnet, daß der einheitliche Grundkörper aus Kunststoff geformt ist.

FIG. 1

FIG. 2

FIG. 3